# EUROPEAN PATENT APPLICATION

(11) **EP 2 704 495 A2**
(43) Date of publication of application: **05.03.2014**
(21) Application number: 13181773.6
(22) Date of filing: 27.08.2013
(51) Int. Cl.: H04W 56/00

(54) **Wireless terminal device and adjustment method**

(30) Priority: 04.09.2012 JP 2012194500
(71) Applicant: FUJITSU LIMITED, Kawasaki-shi, Kanagawa 211-8588 (JP)
(72) Inventor: Murakami, Yasuhiro, Kawasaki-shi, Kanagawa 211-8588 (JP); Yamamori, Yusuke, Kawasaki-shi, Kanagawa 211-8588 (JP); Takeuchi, Yasuaki, Kawasaki-shi, Kanagawa 211-8588 (JP); Tanii, Takashi, Kawasaki-shi, Kanagawa 211-8588 (JP); Hachiya, Nobuhide, Kawasaki-shi, Kanagawa 211-8588 (JP)
(74) Representative: Fenlon, Christine Lesley

(57) **Abstract**

A wireless terminal device includes a transmitter, a receiver, a memory, and a processor coupled to the memory, the processor being configured to measure a transmission processing time and a reception processing time, the transmission processing time being a time for the transmitter to carry out transmission processing, the reception processing time being a time for the receiver to carry out reception processing, and adjust a transmission timing of the transmitter on the basis of the transmission processing time and a reception timing of the receiver on the basis of the reception processing time.

## Description

### FIELD

Techniques disclosed in the embodiments discussed herein are related to adjustment programs, wireless terminal devices, and adjustment methods.

### BACKGROUND

Communication timings of communication between a base station and a wireless terminal within a wireless system are defined by communication standards from the 3rd Generation Partnership Project (3GPP). A wireless terminal determines a transmission timing on the basis of a transmission processing time, which is the time it takes for a transmitter to carry out transmission processing, and also determines a reception timing on the basis of a reception processing time, which is the time it takes for a receiver to carry out reception processing.

However, there are variations among wireless terminals, which leads to variations in their communication timings. Therefore, a wireless terminal communicates with a base station, and if the base station detects a deviation in the communication timing with the wireless terminal, the wireless terminal obtains information on the deviation in the communication timing from the base station. Thus, the wireless terminal adjusts the communication timing on the basis of the information on the deviation in the communication timing obtained from the base station. Japanese Laid-open Patent Publication No. 10-107725, for example, discusses such techniques.

### SUMMARY

According to an embodiment of an aspect of the invention, a wireless terminal device includes a transmitter, a receiver, a memory, and a processor coupled to the memory, the processor being configured to measure a transmission processing time and a reception processing time, the transmission processing time being a time for the transmitter to carry out transmission processing, the reception processing time being a time for the receiver to carry out reception processing, and adjust a transmission timing of the transmitter on the basis of the transmission processing time and a reception timing of the receiver on the basis of the reception processing time.

### BRIEF DESCRIPTION OF DRAWINGS

FIG. 1 illustrates an example of a wireless terminal of a first embodiment;

FIG. 2 illustrates an example of a reception measuring unit;

FIG. 3 illustrates an example of a transmission measuring unit;

FIG. 4 illustrates examples of read timings of a reception FIFO and a transmission FIFO in communication processing;

FIG. 5 is a flowchart illustrating an example of a processing operation of a control circuit in pre-shipment measurement processing of the wireless terminal;

FIG. 6 is a flowchart illustrating an example of a processing operation of the wireless terminal in communication timing adjustment processing;

FIG. 7A illustrates examples of read timings of the reception FIFO and the transmission FIFO prior to adjusting the communication timing;

FIG. 7B illustrates examples of read timings of the reception FIFO and the transmission FIFO after adjusting the communication timing;

FIG. 8 illustrates an example of a wireless terminal of a second embodiment; and

FIG. 9 illustrates a wireless terminal device that executes an adjustment program.

### DESCRIPTION OF EMBODIMENTS

In an existing technique, a wireless terminal communicates with a base station and adjusts communication timings on the basis of information on a deviation in the communication timings obtained from the base station. For example, if the communication timings deviate markedly from the communication standards, the wireless terminal becomes unable to communicate with the base station. Then, the wireless terminal fails to obtain information on a deviation in the communication timings since the wireless terminal is unable to communicate with the base station, and thus the wireless terminal fails to adjust the communication timings. Techniques discussed in the embodiments described hereinafter allow a wireless terminal to adjust communication timings.

Hereinafter, embodiments of an adjustment program, a wireless terminal device, and an adjustment method disclosed in the present specification will be described in detail with reference to the drawings. It is to be noted that the embodiments do not limit the disclosed techniques. Furthermore, the embodiments described hereinafter may be combined appropriately as long as no inconsistency arises.

FIRST EMBODIMENT

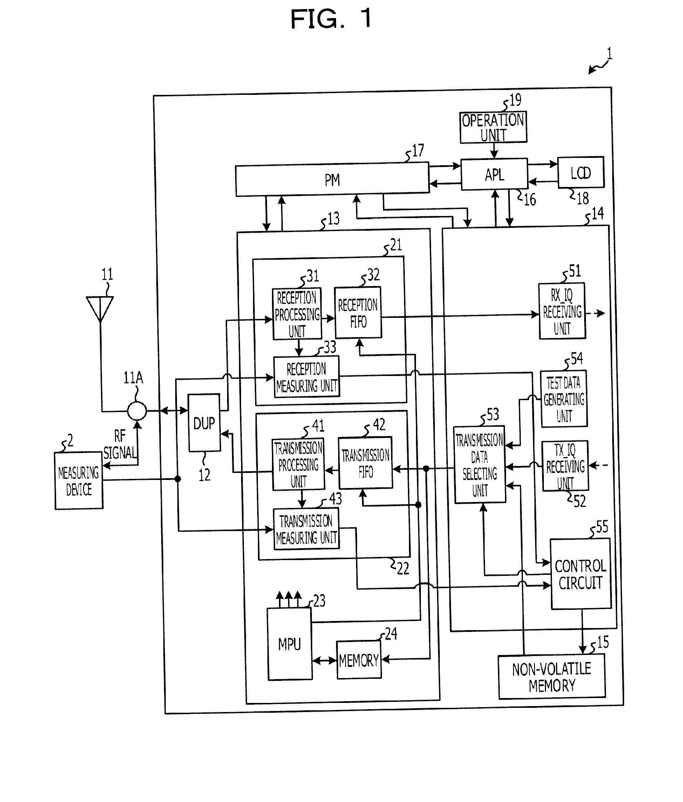

FIG. 1 illustrates an example of a wireless terminal of a first embodiment. A wireless terminal 1 illustrated in FIG. 1 includes an antenna 11, a duplexer (DUP) 12, a radio frequency large scale integration (RF-LSI) 13, a baseband large scale integration (BB-LSI) 14, and a non-volatile memory 15. The wireless terminal 1 further includes an application unit 16, a power module (PM) 17, a liquid crystal display (LCD) 18, and an operation unit 19. The wireless terminal 1, for example, is a portable telephone terminal such as a smartphone.

The antenna 11 transmits and receives an RF signal. The DUP 12 is arranged between the antenna 11 and the RF-LSI 13 and serves as a bidirectional switch for switching between a transmission RF signal and a reception RF signal within the RF-LSI 13. The PM 17 is a power supply that supplies power to the entire wireless terminal 1. The LCD 18 is an output interface that displays various information pieces. The operation unit 19 is an input interface through which various commands are inputted. The non-volatile memory 15 stores various information pieces.

The RF-LSI 13 includes frequency conversion functionality for converting a reception RF signal into a baseband signal or a baseband signal into a transmission RF signal through frequency conversion using a local oscillator and a mixer (not illustrated). The RF-LSI 13 includes an RF receiver 21, an RF transmitter 22, a microprocessing unit (MPU) 23, and a memory 24. The RF receiver 21 carries out reception processing on a reception RF signal received via the antenna 11. The reception processing includes frequency conversion processing, filter processing, and digital conversion processing. In the frequency conversion processing, the RF receiver 21 converts an RF signal into a baseband signal through frequency conversion. In the filter processing, the RF receiver 21 removes an unwanted noise component from the baseband signal that has been obtained through frequency conversion. In the digital conversion processing, the RF receiver 21 digitally converts the baseband signal that has been subjected to the filter processing to obtain reception data.

The RF receiver 21 includes a reception processing unit 31, a reception FIFO 32, and a reception measuring unit 33. The reception processing unit 31 carries out the reception processing on an RF signal to obtain reception data. The reception FIFO 32 sequentially stores reception data pieces obtained by the reception processing unit 31. The reception measuring unit 33 measures a reception processing time, which is the time it takes for the reception processing unit 31 to carry out the reception processing.

The RF transmitter 22 carries out transmission processing on transmission data of a baseband signal from the BB-LSI 14 to obtain a transmission RF signal. The transmission processing includes analog conversion processing, filter processing, and frequency conversion processing. In the analog conversion processing, the RF transmitter 22 converts transmission data of a baseband signal into an analog signal. In the filter processing, the RF transmitter 22 removes an unwanted noise component from the baseband signal that has been converted into an analog signal. In the frequency conversion processing, the RF transmitter 22 converts the baseband signal that has been subjected to the filter processing into an RF signal through frequency conversion.

The RF transmitter 22 includes a transmission processing unit 41, a transmission FIFO 42, and a transmission measuring unit 43. The transmission processing unit 41 carries out transmission processing on transmission data to obtain a transmission RF signal. The transmission FIFO 42 sequentially stores transmission data pieces. The transmission measuring unit 43 measures a transmission processing time, which is the time it takes for the transmission processing unit 41 to carry out the transmission processing.

The BB-LSI 14 includes an RX_IQ receiver 51, a TX_IQ transmitter 52, a transmission data selecting unit 53, a test data generating unit 54, and a control circuit 55. The RX_IQ receiver 51 demodulates reception data of an IQ component stored in the reception FIFO 32. The TX_IQ transmitter 52 modulates transmission data. The test data generating unit 54 generates, for example, transmitter-side test data, which is an example of a second test signal, to be used to measure a transmission processing time by the transmission measuring unit 43. Note that the test data, for example, is a digitally converted continuous wave (CW) signal. The transmission data selecting unit 53 selects between the test data generating unit 54 and the TX_IQ transmitter 52 in accordance with a selection signal from the control circuit 55. The control circuit 55 controls the entire BB-LSI 14. Upon receiving a reception processing time, that is, a measurement result, from the reception measuring unit 33, the control circuit 55 stores the reception processing time in the non-volatile memory 15. Further, upon receiving a transmission processing time, that is, a measurement result, from the transmission measuring unit 43, the control circuit 55 stores the transmission processing time in the non-volatile memory 15.

An antenna connector 11A is arranged between the antenna 11 and the DUP 12, and this antenna connector 11A can, for example, be connected to a measuring device 2 such as a radio communication analyzer. The measuring device 2, when connected to the antenna connector 11A, for example, transmits a sine wave CW signal, which is an example of a test signal or a first test signal, to the RF receiver 21 via the DUP 12 within the wireless terminal 1. In addition, the measuring device 2 transmits a start signal to the reception measuring unit 33 within the RF receiver 21 in synchronization with the start of transmission of the CW signal to the RF receiver 21. Note that this start signal serves as a trigger signal for starting a count operation of the reception measuring unit 33.

The measuring device 2 receives a transmission RF signal of the test data generated by the test data generating unit 54 via the RF transmitter 22 and the DUP 12. In addition, the measuring device 2 transmits a stop signal to the transmission measuring unit 43 within the RF transmitter 22 at a timing at which the measuring device 2 receives the transmission RF signal of the test data. Note that the stop signal serves as a trigger signal for stopping the count operation of the transmission measuring unit 43.

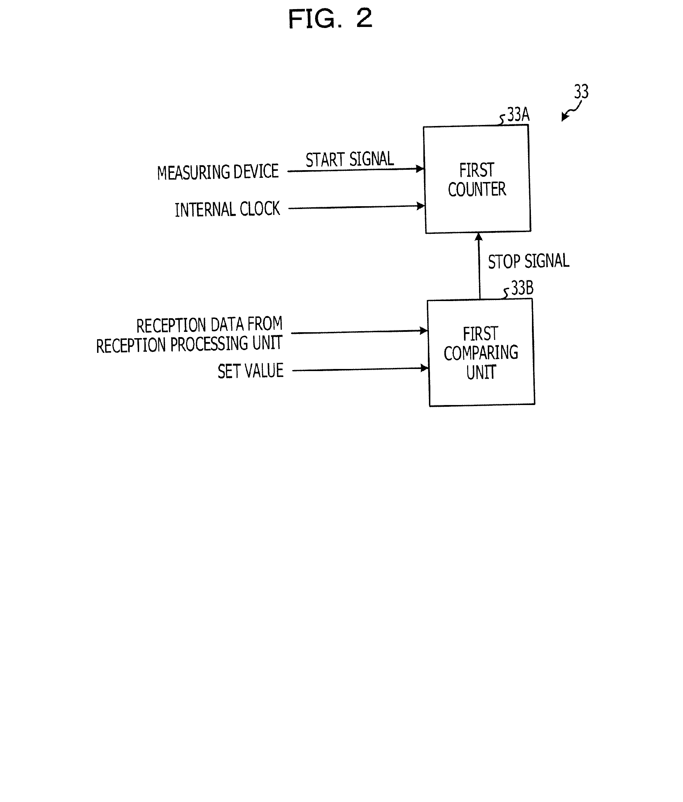

FIG. 2 illustrates an example of the reception measuring unit 33. The reception measuring unit 33 illustrated in FIG. 2 includes a first counter 33A and a first comparing unit 33B. The first counter 33A starts a count operation of an internal clock in response to a start signal from the measuring device 2. Note that the measuring device 2 outputs the start signal to the reception measuring unit 33 in synchronization with the start of transmission of a CW signal to the RF receiver 21. The first comparing unit 33B compares, with a set value, an output level of reception data from the reception processing unit 31 obtained by subjecting a CW signal to the reception processing. If the output level of the reception data exceeds the set value, the first comparing unit 33B outputs a stop signal to the first counter 33A. Note that the set value is a threshold value for identifying reception data that has been subjected to the reception processing. The first counter 33A stops the count operation in response to the stop signal from the first comparing unit 33B. Thus, the first counter 33A obtains a reception processing time on the basis of a count value from the start of the count operation to the end thereof. Then, the reception measuring unit 33 notifies the control circuit 55 of the obtained reception processing time. The control circuit 55 in turn stores the obtained reception processing time in the non-volatile memory 15.

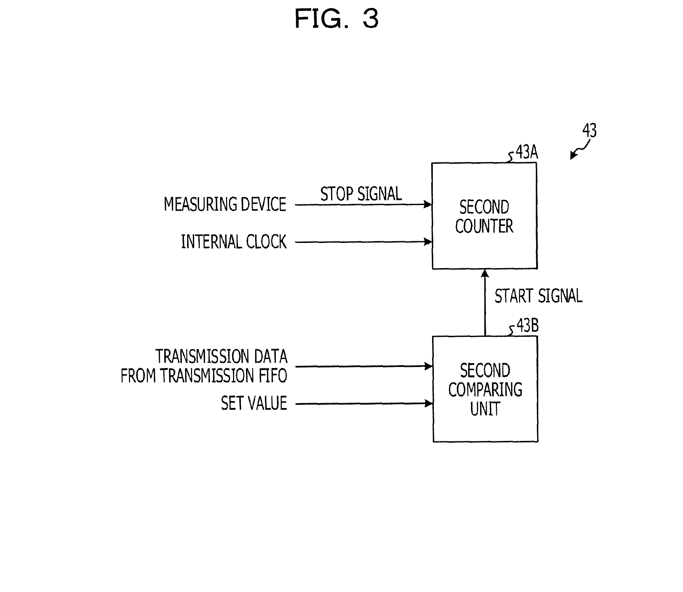

FIG. 3 illustrates an example of the transmission measuring unit 43. The transmission measuring unit 43 illustrated in FIG. 3 includes a second counter 43A and a second comparing unit 43B. The second comparing unit 43B compares, with a set value, an output level of transmission data of test data from the transmission FIFO 42. If the output level of the transmission data exceeds the set value, the second comparing unit 43B outputs a start signal to the second counter 43A. Note that the set value is a threshold value for identifying transmission data. The second counter 43A starts a count operation of an internal clock in response to the start signal from the second comparing unit 43B. Then, the second counter 43A stops the count operation in response to a stop signal from the measuring device 2. Note that the measuring device 2 outputs the stop signal to the second counter 43A at a timing at which the measuring device 2 receives a transmission RF signal of test data generated by the test data generating unit 54 via the RF transmitter 22 and the DUP 12. The second counter 43A stops the count operation in response to the stop signal from the measuring device 2. Thus, the second counter 43A obtains a transmission processing time based on a count value from the start of the count operation to the end thereof. Then, the transmission measuring unit 43 notifies the control circuit 55 of the obtained transmission processing time. The control circuit 55 in turn stores the obtained transmission processing time in the non-volatile memory 15.

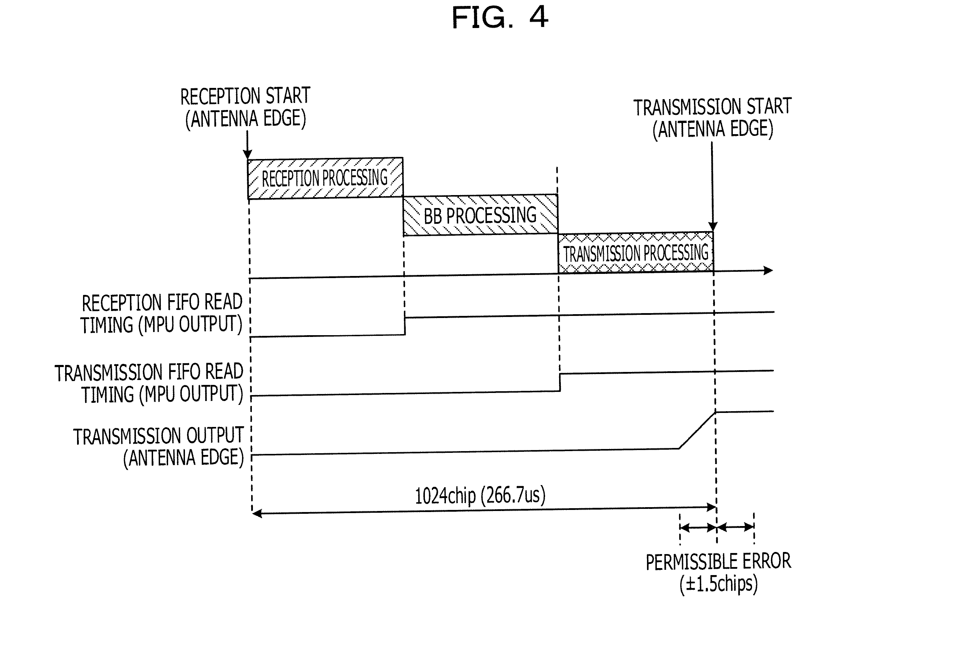

Upon detecting a power supply being turned on through the PM 17, the control circuit 55 loads into the memory 24 the reception processing time and the transmission processing time stored in the non-volatile memory 15 and starts the RF-LSI 13 and the BB-LSI 14. Here, turning on the power supply means turning on the power supply of the wireless terminal 1 and starting communication upon the power supply being turned on. The MPU 23 adjusts a read timing of the reception FIFO 32 on the basis of the reception processing time stored in the memory 24 so that a communication processing cycle falls within the standard. FIG. 4 illustrates examples of read timings of the reception FIFO 32 and the transmission FIFO 42 in communication processing. In the communication processing illustrated in FIG. 4, reception processing, BB processing, and transmission processing are sequentially carried out, and communication is maintained by repeatedly carrying out the communication processing. The communication processing includes a reception processing segment in which the RF receiver 21 carries out the reception processing, a BB processing segment in which the BB-LSI 14 carries out the BB processing, and a transmission processing segment in which the RF transmitter 22 carries out the transmission processing. A communication processing cycle is defined by communication standards as a predetermined cycle (1024 chips: 266.7 µs). A permissible error in the predetermined cycle is ±1.5 chips. The MPU 23 also adjusts a read timing of the transmission FIFO 42 on the basis of the transmission processing time stored in the memory 24 so that the communication processing cycle falls within the standard.

In the communication processing illustrated in FIG. 4, if the timings of the reception processing, the BB processing, and the transmission processing are within the standard, the MPU 23 outputs a read timing of the reception FIFO 32 in synchronization with the end of the reception processing by the RF receiver 21. In addition, the MPU 23 outputs a read timing of the transmission FIFO 42 in synchronization with the start of the transmission processing by the RF transmitter 22. Consequently, the transmission output of the antenna 11 is stabilized as the output level of an RF signal gradually increases in accordance with the transmission processing of the RF transmitter 22.

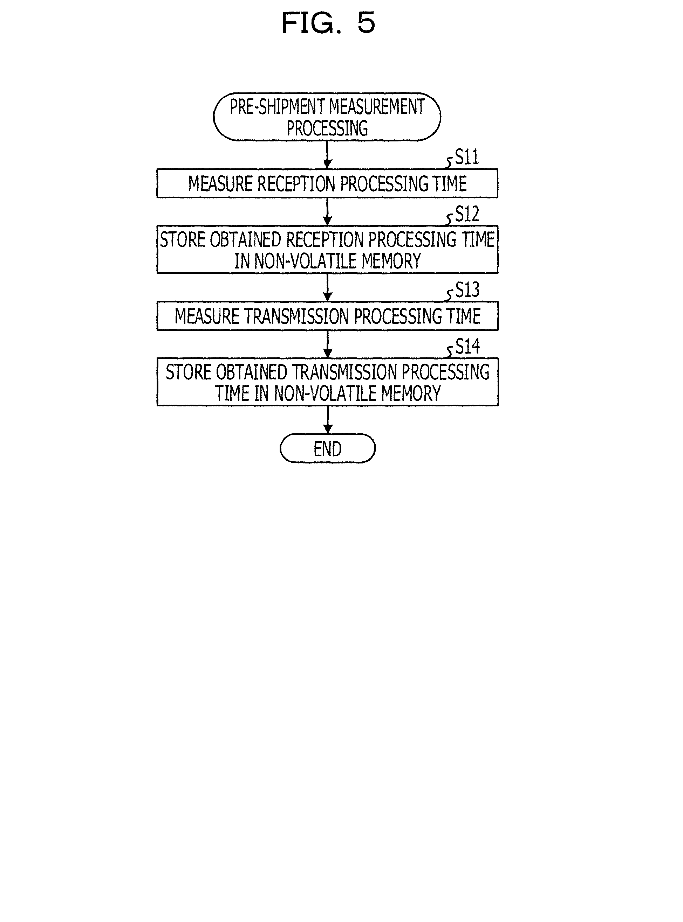

The operation of the wireless terminal 1 of the first embodiment will now be described. FIG. 5 is a flowchart illustrating an example of a processing operation of the control circuit 55 in pre-shipment measurement processing of the wireless terminal 1. In the pre-shipment measurement processing illustrated in FIG. 5, a transmission processing time and a reception processing time of a wireless terminal 1 are measured before the wireless terminal 1 is shipped from a factory. The control circuit 55 within the wireless terminal 1, for example, starts a test mode by connecting the antenna connector 11A to the measuring device 2 before the wireless terminal 1 is shipped from the factory. Upon starting the test mode, the control circuit 55 measures a reception processing time with the reception measuring unit 33 (step S11).

The control circuit 55 stores the reception processing time obtained by the reception measuring unit 33 in the non-volatile memory 15 (step S12). In addition, the control circuit 55 measures a transmission processing time with the transmission measuring unit 43 (step S13). The control circuit 55 stores the transmission processing time obtained by the transmission measuring unit 43 in the non-volatile memory 15 (step S14) and terminates the processing operation illustrated in FIG. 5.

The control circuit 55 in the pre-shipment measurement processing illustrated in FIG. 5 measures the reception processing time, which is the time it takes for the RF receiver 21 to carry out the reception processing, with the reception measuring unit 33 before the wireless terminal 1 is shipped from the factory and stores the measurement result in the non-volatile memory 15. Thus, the control circuit 55 can obtain the reception processing time spent on the reception processing before the wireless terminal 1 is shipped from the factory.

In addition, the control circuit 55 measures the transmission processing time, which is the time it takes for the RF transmitter 22 to carry out the transmission processing, with the transmission measuring unit 43 and stores the measurement result in the non-volatile memory 15. Thus, the control circuit 55 can obtain the transmission processing time spent on the transmission processing before the wireless terminal 1 is shipped from the factory.

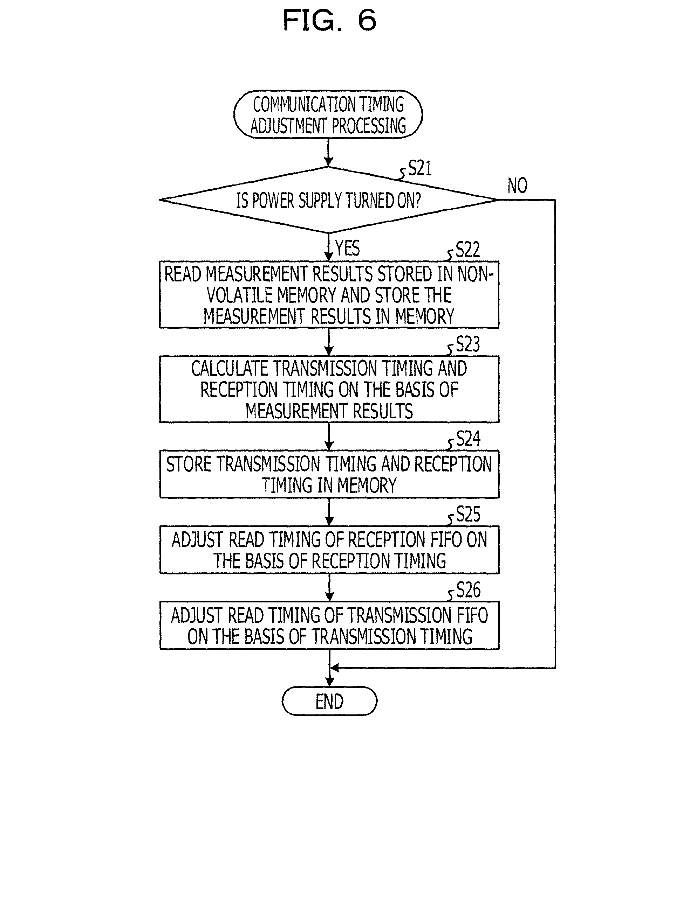

FIG. 6 is a flowchart illustrating an example of a processing operation of the wireless terminal 1 in communication timing adjustment processing. In the communication timing adjustment processing illustrated in FIG. 6, communication timings are adjusted on the basis of the reception processing time and the transmission processing time stored in the non-volatile memory 15 when the power supply of the wireless terminal 1 is turned on.

The control circuit 55 of the wireless terminal 1 determines whether or not the control circuit 55 has detected a power supply being turned on through the PM 17 (step S21). If the control circuit 55 has detected the power supply being turned on (YES in step S21), the control circuit 55 reads the measurement results stored in the non-volatile memory 15 and then stores the measurement results in the memory 24 (step S22). The MPU 23 starts the RF-LSI 13 and the BB-LSI 14 and then calculates a transmission timing and a reception timing on the basis of the measurement results stored in the memory 24 (step S23). The MPU 23 stores the calculated transmission and reception timings in the memory 24 (step S24).

The MPU 23 adjusts a read timing of the reception FIFO 32 on the basis of the reception timing so that the communication processing cycle falls within the standard (step S25). In addition, the MPU 23 adjusts a read timing of the transmission FIFO 42 on the basis of the transmission timing so that the communication processing cycle falls within the standard (step S26) and terminates the processing operation illustrated in FIG. 6.

The MPU 23 in the communication timing adjustment processing illustrated in FIG. 6 generates the reception timing on the basis of the reception processing time stored in the non-volatile memory 15 in response to the power supply being turned on. Then, the MPU 23 adjusts the read timing of the reception FIFO 32 on the basis of the generated reception timing so that the communication processing cycle falls within the standard. Thus, even if the reception processing time of the RF receiver 21 varies, the MPU 23 can adjust the communication processing cycle to stay within the standard by suppressing a variation in the output timing of reception data to the BB-LSI 14 in the BB processing segment immediately after the reception processing segment.

The MPU 23 generates the transmission timing on the basis of the transmission processing time stored in the non-volatile memory 15 in response to the power supply being turned on. Then, the MPU 23 adjusts the read timing of the transmission FIFO 42 on the basis of the transmission timing so that the communication processing cycle falls within the standard. Thus, even if the transmission processing time of the RF transmitter 22 varies, the MPU 23 can adjust the communication processing cycle to stay within the standard by suppressing a variation in the output timing of a transmission RF signal in the transmission processing.

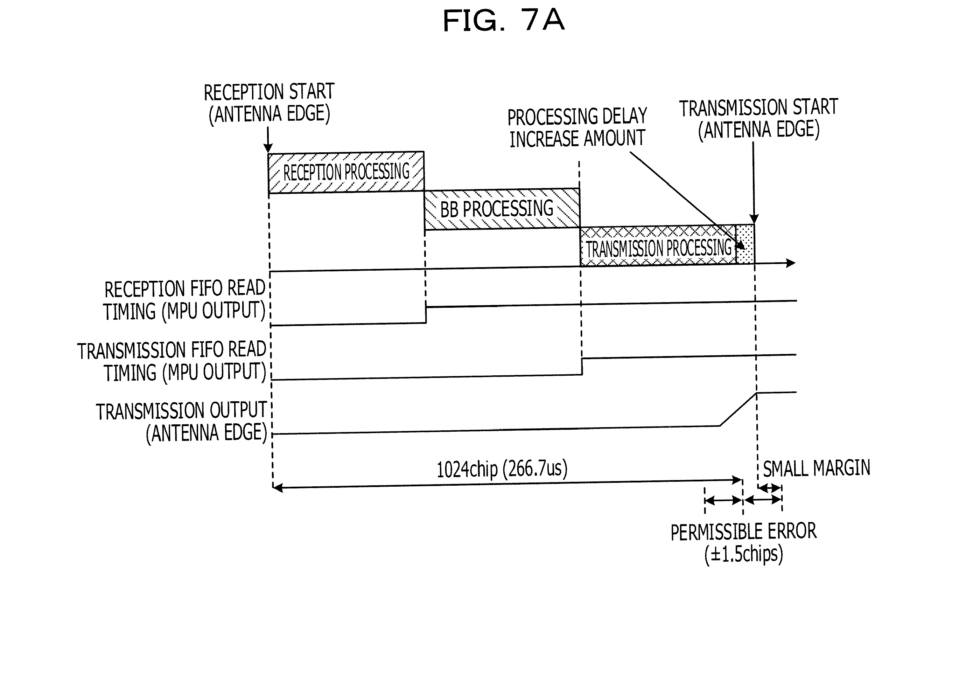

FIG. 7A illustrates examples of read timings of the reception FIFO 32 and the transmission FIFO 42 before the communication timings are adjusted. In the communication processing illustrated in FIG. 7A, for example, a processing delay has occurred in the transmission processing. Thus, since the read timings of the reception FIFO 32 and the transmission FIFO 42 have not been adjusted, the transmission processing is delayed by the delay time until the transmission output of the antenna 11 reaches a stable level.

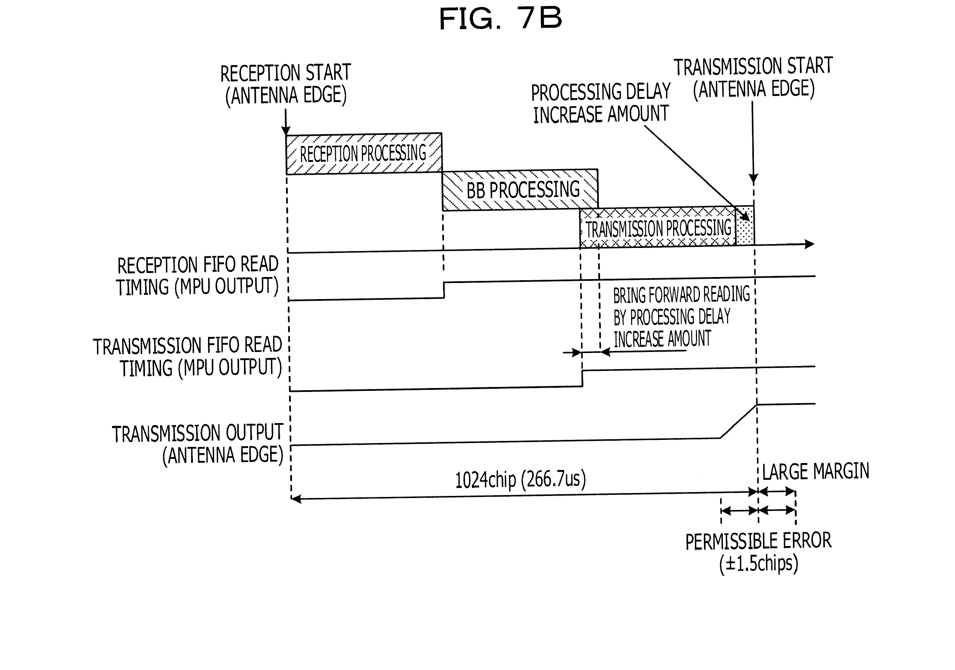

FIG. 7B illustrates examples of read timings of the reception FIFO 32 and the transmission FIFO 42 after the communication timings have been adjusted. In the communication processing illustrated in FIG. 7B, a processing delay has occurred in the transmission processing segment, as in the case illustrated in FIG. 7A. The MPU 23 brings forward the read timing of the transmission FIFO 42 by the delay time so that the communication processing cycle in the transmission processing of the RF transmitter 22 falls within the standard. As a result, the processing delay in the transmission processing can be resolved by bringing forward the read timing of the transmission FIFO 42.

Although a case where a delay occurs in the transmission processing has been illustrated in the example illustrated in FIG. 7B, if a delay occurs in the reception processing, the read timing of the reception FIFO 32 is moved up by a processing delay increase amount in the reception processing.
As a result, the processing delay in the BB processing immediately after the reception processing can be resolved by moving up the read timing of the transmission FIFO 32. Thus, the communication processing cycle falls within the standard.

The wireless terminal 1 of the first embodiment, when connected to the measuring device 2 prior to being shipped from the factory, measures a reception processing time that has elapsed since the measuring device 2 starts transmitting a CW signal to the RF receiver 21 via the DUP 12 until the RF receiver 21 completes the reception processing on the CW signal. Then, the wireless terminal 1 stores the reception processing time in the non-volatile memory 15. It is to be noted that the wireless terminal 1 does not have to be in synchronization with a base station while measuring the reception processing time.

The wireless terminal 1 measures a transmission processing time that has elapsed since the RF transmitter 22 receives test data from the test data generating unit 54 via the transmission FIFO 42 until an RF signal that has been subjected to the transmission processing by the RF transmitter 22 reaches the measuring device 2 via the DUP 12. Then, the wireless terminal 1 stores the transmission processing time in the non-volatile memory 15. It is to be noted that the wireless terminal 1 does not have to be in synchronization with the base station while measuring the transmission processing time.

Then, the wireless terminal 1, upon its power supply being turned on, adjusts the read timing of the transmission FIFO 42 on the basis of the measurement result of the transmission processing time stored in the non-volatile memory 15. Accordingly, even if the transmission processing time goes off, the wireless terminal 1 can suppress a variation in the output timing of the transmission RF signal in the transmission processing by individually adjusting the transmission timing, and thus the communication processing cycle can be adjusted to stay within the standard.

In addition, the wireless terminal 1, upon its power supply being turned on, adjusts the read timing of the reception FIFO 32 on the basis of the measurement result of the reception processing time stored in the non-volatile memory 15. Accordingly, even if the reception processing time goes off, the wireless terminal 1 can suppress a variation in the output timing of the reception data to the BB-LSI 14 by individually adjusting the reception timing, and thus the communication processing cycle can be adjusted to stay within the standard.

Furthermore, even if a change occurs in the RF-LSI 13, the BB-LSI 14, and so on over the years, the wireless terminal 1 adjusts the read timings of the reception FIFO 32 and the transmission FIFO 42 on the basis of the measurement results of the reception processing time and the transmission processing time, each time the power supply thereof is turned on. As a result, even if the communication timing goes off over the years, the communication processing cycle can be adjusted to stay within the standard.

In addition, the wireless terminal 1 calculates the reception timing and the transmission timing on the basis of the reception processing time and the transmission processing time, respectively, and makes an adjustment for each terminal. Thus, a variation among terminals is suppressed, and a situation where the terminals no longer meet the standards through changes over the years can be avoided.

In the first embodiment described above, the test data generating unit 54 for generating test data to be used to measure the transmission processing time by the transmission measuring unit 43 is embedded in the wireless terminal 1. Alternatively, output data of the reception processing unit 31 may instead be used as test data. This mode will now be described as a second embodiment, hereinafter.

SECOND EMBODIMENT

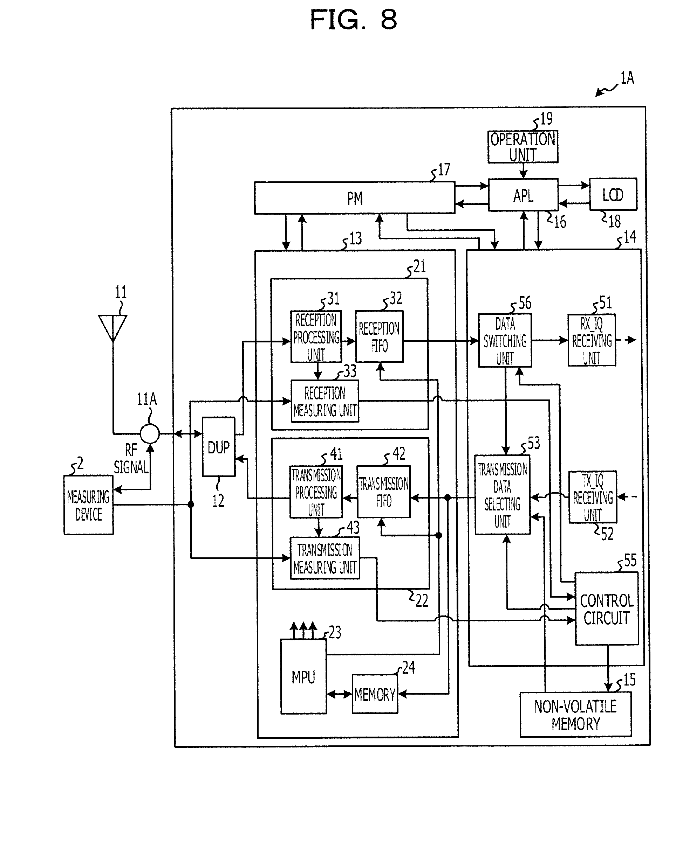

FIG. 8 illustrates an example of a wireless terminal of the second embodiment. Components that are identical to those in the wireless terminal 1 illustrated in FIG. 1 are given identical reference characters, and duplicate descriptions of the configurations and operations thereof will be omitted. A wireless terminal 1A illustrated in FIG. 8 differs from the wireless terminal 1 illustrated in FIG. 1 in that a data switching unit 56 is provided in place of the test data generating unit 54 within the BB-LSI 14. The data switching unit 56 is arranged between the reception FIFO 32 and the RX_IQ receiver 51. When the data switching unit 56 reads from the reception FIFO 32 reception data of a CW signal that has been subjected to the reception processing by the reception processing unit 31, the data switching unit 56 outputs the read reception data to the transmission data selecting unit 53 as test data. The control circuit 55 controls the switching of the data switching unit 56.

When the reception processing unit 31 completes the reception processing on the CW signal, the reception measuring unit 33 obtains a measurement result of the reception processing time and notifies the control circuit 55 of the measurement result. The control circuit 55 stores the measurement result in the non-volatile memory 15. Further, upon receiving the measurement result of the reception processing time, the control circuit 55 connects an output of the data switching unit 56 to the transmission data selecting unit 53 and connects an input of the transmission data selecting unit 53 to the data switching unit 56.

Then, the transmission data selecting unit 53 stores the reception data stored in the reception FIFO 32 into the transmission FIFO 42 as test data via the data switching unit 56. Then, the transmission processing unit 41 reads the test data stored in the transmission FIFO 42 and carries out the transmission processing on the test data. In addition, the transmission processing unit 41 transmits a transmission RF signal of the test data to the measuring device 2 via the DUP 12. As a result, the transmission measuring unit 43 starts measuring a transmission processing time of the transmission processing unit 41 at a timing at which the measuring device 2 receives the transmission RF signal of the test data, and notifies the control circuit 55 of the measurement result. Upon receiving the measurement result of the transmission processing time, the control circuit 55 stores the measurement result of the transmission processing time in the non-volatile memory 15.

In addition, upon receiving the measurement result of the transmission processing time, the control circuit 55 controls the data switching unit 56 and the transmission data selecting unit 53 so that the output of the data switching unit 56 is connected to the RX_IQ receiver 51 and the input of the transmission data selecting unit 53 is connected to the TX_IQ transmitter 52.

The wireless terminal 1A of the second embodiment, although the test data generating unit 54 is not embedded therein, can use the reception data of the CW signal used to measure the reception processing time of the reception measuring unit 33 as the test data to be used to measure the transmission processing time of the transmission measuring unit 43.

Although a smartphone is illustrated as an example of the wireless terminal 1 (1A) in the embodiments described above, similar effects can be obtained even if a tablet terminal or an information terminal provided with wireless communication functionality is employed.

Each of the components illustrated in the drawings does not necessarily have a physical configuration as illustrated in the drawings. In other words, specific modes of integration or disintegration of the components are not limited to those illustrated in the drawings, and the whole or a part of the components can be functionally or physically integrated or disintegrated in desired units in accordance with various loads or usage situations.

Furthermore, the whole or a desired part of various processing functions to be carried out in each unit may be implemented with a central processing unit (CPU) (or a microcomputer such as a microprocessing unit (MPU) and a microcontroller unit (MCU)). It is needless to state that the whole or a desired part of the various processing functions may be implemented through a program to be analyzed and executed by a CPU (or a microcomputer such as an MPU and an MCU) or through hardware of a wired logic.

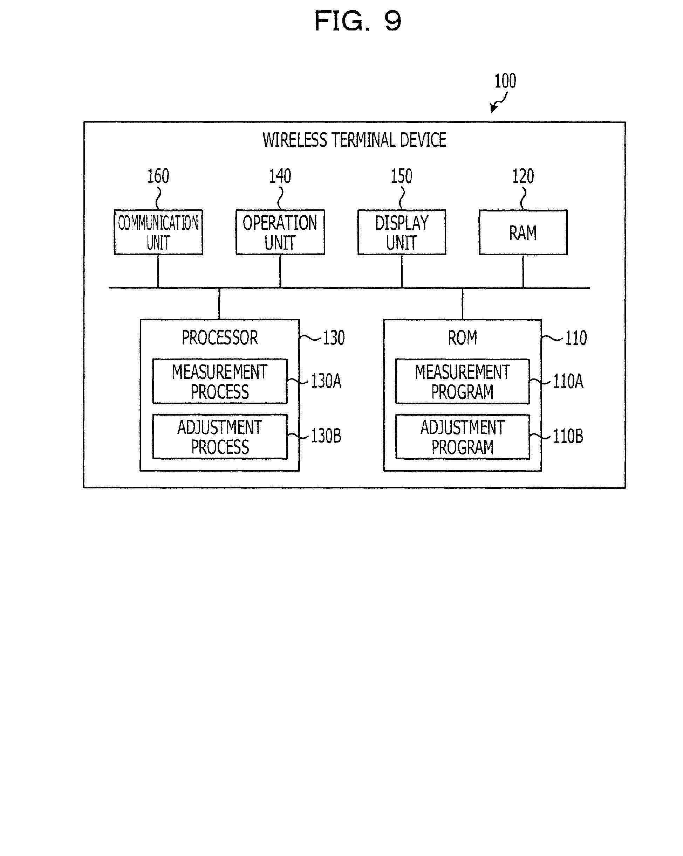

The various processing operations described in the present embodiments can be realized by executing a program prepared in advance in a wireless terminal device. Hereinafter, an example of a wireless terminal device that executes a program having similar functions to those in the above embodiments will be described. FIG. 9 illustrates a wireless terminal device 100 that executes an adjustment program.

With reference to FIG. 9, the wireless terminal device 100 that executes the adjustment program includes a ROM 110, a RAM 120, a processor 130, an operation unit 140, a display unit 150, and a communication unit 160. The adjustment program that realizes similar functions to those in the above embodiments is stored in advance in the ROM 110. Alternatively, the adjustment program may be recorded in a recording medium, in place of the ROM 110, that can be read by a drive (not illustrated). The recording medium may, for example, be a portable recording medium such as a CD-ROM, a DVD disc, a USB memory, and an SD card, or a semiconductor memory such as a flash memory. The adjustment program includes a measurement program 110A and an adjustment program 110B as illustrated in FIG. 9. Note that the programs 110A and 110B may be integrated or disintegrated as appropriate.

The processor 130 reads the programs 110A and 110B from the ROM 110 and executes each of the read programs 110A and 110B. Then, the processor 130 causes the programs 110A and 110B to function as a measurement process 130A and an adjustment process 130B, respectively.

The processor 130 of the wireless terminal device 100 measures a transmission processing time, which is the time it takes for the communication unit 160 to carry out transmission processing, and a reception processing time, which is the time it takes for the communication unit 160 to carry out reception processing, before the wireless terminal device 100 is shipped. Then, the processor 130 stores the measured transmission processing time and reception processing time in the RAM 120. During communication, the processor 130 adjusts a transmission timing of the communication unit 160 on the basis of the transmission processing time stored in the RAM 120. The processor 130 also adjusts a reception timing of the communication unit 160 on the basis of the reception processing time stored in the RAM 120. As a result, the wireless terminal device 100 can adjust the communication timings by individually adjusting the reception timing and the transmission timing.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present invention have been described in detail, it should be understood that the various changes, substitutions, and alterations could be made hereto without departing from the scope of the invention.

## Claims

1. A wireless terminal device, comprising:
a transmitter;
a receiver;
a memory; and
a processor coupled to the memory, the processor being configured to
measure a transmission processing time and a reception processing time, the transmission processing time being a time for the transmitter to carry out transmission processing, the reception processing time being a time for the receiver to carry out reception processing, and
adjust a transmission timing of the transmitter on the basis of the transmission processing time and a reception timing of the receiver on the basis of the reception processing time.

2. The wireless terminal device according to claim 1,
wherein the processor is configured to
receive a first test signal from a measurement device arranged between an antenna and the receiver and carrying out the reception processing on the first test signal,
measure the reception processing time corresponding to a period starting from when the measurement device starts outputting the first test signal until the reception processing on the first test signal is completed,
carry out the transmission processing on a second test signal and transmitting the second signal that has been subjected to the transmission processing to the measurement device arranged between the antenna and the transmitter, and
measure the transmission processing time corresponding to a period starting from when the transmission processing on the second test signal is completed until the measurement device receives the second test signal.

3. The wireless terminal device according to claim 1,
wherein the processor is configured to
receive a test signal from a measurement device arranged between an antenna and the receiver and carrying out the reception processing on the test signal,
measure the reception processing time corresponding to a period starting from when the measurement device starts outputting the test signal until the reception processing on the test signal is completed,
carry out the transmission processing on the test signal that has been subjected to the reception processing and transmitting the test signal that has been subjected to the transmission processing to the measurement device arranged between the antenna and the transmitter, and
measure the transmission processing time corresponding to a period starting from when the transmission processing on the test signal is completed until the measurement device receives the test signal.

4. The wireless terminal device according to any preceding claim, wherein the processor is configured to
adjust a read timing of a reception FIFO that sequentially stores signals that have been subjected to the reception processing by the receiver on the basis of the reception processing time, and
adjust a read timing of a transmission FIFO that stores a signal to be transmitted to the transmitter on the basis of the transmission processing time.

5. A storage medium storing an adjustment program that causes a processor to execute operations, the operations comprising:
measuring a transmission processing time and a reception processing time, the transmission processing time being a time for a transmitter to carry out transmission processing, the reception processing time being a time for a receiver to carry out reception processing; and
adjusting, during communication, a transmission timing of the transmitter on the basis of the transmission processing time and a reception timing of the receiver on the basis of the reception processing time.

6. A method for adjusting a wireless terminal device that includes a transmitter, a receiver, a memory, and a processor, the method comprising:
measuring a transmission processing time and a reception processing time, the transmission processing time being a time for the transmitter to carry out transmission processing, the reception processing time being a time for the receiver to carry out reception processing, and
adjusting, by the processor, a transmission timing of the transmitter on the basis of the transmission processing time and a reception timing of the receiver on the basis of the reception processing time.
